# EUROPÄISCHE PATENTSCHRIFT

(11) **EP 2 881 634 B1**
(45) Veröffentlichungstag und Bekanntmachung des Hinweises auf die Patenterteilung: **29.03.2017**
(21) Anmeldenummer: 14196395.9
(22) Anmeldetag: 04.12.2014
(51) Int. Cl.: F16K 1/22, F02D 9/10

(54) **Klappenanordnung für ein Stellglied, insbesondere für ein Abgasventil eines Verbrennungsmotors**
Flap assembly for an actuator, in particular for an exhaust valve of a combustion engine
Système de clapet pour un actionneur, en particulier pour une soupape de gaz d'échappement d'un moteur à combustion interne

(30) Priorität: 04.12.2013 DE 102013224923
(43) Veröffentlichungstag der Anmeldung: 10.06.2015
(73) Patentinhaber: MAHLE Behr GmbH & Co. KG, 70469 Stuttgart (DE)
(72) Erfinder: Panic, Predrag, 71686 Remseck (DE); Schüle, Matthias, 71732 Tamm (DE); Emrich, Karsten, 70599 Stuttgart (DE)
(74) Vertreter: Grauel, Andreas

(56) Entgegenhaltungen:
- DE-B3-102007 013 782
- GB-A- 2 438 420
- JP-A- S5 946 443
- US-A- 3 084 715
- US-A- 5 979 872
- US-B1- 6 503 140

## Beschreibung

### Technischer Gebiet

Die Erfindung betrifft eine Klappenanordnung für ein Stellglied nach dem Oberbegriff von Anspruch 1.

### Stand der Technik

Aus der DE 10 2007 013 782 B3 ist eine Klappenvorrichtung für eine Verbrennungskraftmaschine bekannt, bei welcher die Klappenvorrichtung aus einem Klappenkörper besteht, der mit an entgegengesetzten Seiten angeordneten Fortsätze ausgebildet ist. Der Klappenkörper und die Fortsätze sind dabei aus einem Blech ausgestanzt. Die Fortsätze sind um 70° bis 100° gebogen und mit einer Welle, insbesondere mittels Schweißen, verbunden.

In der DE 26 07 619 A1 ist eine Absperrklappe offenbart, welche eine gelagerte Klappenscheibe aufweist, die als Stanzteil ausgebildet ist. Auf einem Klappenteller der Klappenscheibe sind um 180° versetzte, spiegelbildlich zueinander angeordnete Teile auf- oder eingesetzt, die als Lageraugen für Wellenzapfen dienen.

Aus der GB 2 438 420 A ist ein Drosselklappen-Ensemble bekannt, welches ein Gehäuse aufweist, in dem ein Kanal angeordnet ist, wobei das Volumen des durch den Kanal strömenden Fluids mittels einer Drosselklappe eingestellt wird. Die Drosselklappe weist an zwei aneinander um 180° gegenüberliegenden Enden Fortsätze auf, welche über den Kanal hinausragen, wobei einer der Fortsätze in eine Ausnehmung einer schwenkfähigen Achse eingreift, wodurch die Klappe in ihrer Position verstellbar angeordnet ist.

Nachteilig bei diesen Ausbildungen ist, dass die Klappen aus vielen Einzelteilen angefertigt sind, deren Zusammenfügen sehr hohe Investitionen für die Verbindungstechnologien notwendig machen. So muss in jedem Fall die Klappe über Zwischenteile mit einer Welle verschweißt, verlötet, vernietet oder verschraubt werden.

### Darstellung der Erfindung, Aufgabe, Lösung, Vorteile

Es ist die Aufgabe der Erfindung, eine Klappenanordnung für ein Stellglied zu schaffen, die eine reduzierte Komplexität aufweist und somit kostengünstig herstellbar ist.

Dies wird mit den Merkmalen von Anspruch 1 gelöst.

Ein Ausführungsbeispiel betrifft eine Klappenanordnung für ein Stellglied, insbesondere für ein Abgasventil eines Verbrennungsmotors, mit einem Klappenkörper, welcher an seinem Außenumfang zwei zueinander entgegengesetzt angeordnete Laschen trägt, wobei Klappenkörper und Laschen aus einem Teil ausgestanzt sind und der Klappenkörper über eine Lagerbuchse eines Lagers zur Ausführung einer Schwenkbewegung mit einer Hebeleinrichtung in einer Wirkverbindung steht. Bei dieser Klappenanordnung greift die erste Lasche durch die Lagerbuchse hindurch und ist an dem Hebel befestigt. Der Vorteil dieser Ausgestaltung besteht darin, dass auf eine Welle zur Realisierung der Schwenkbewegung verzichtet werden kann, da die Funktion der Welle durch die erste Lasche erfüllt wird, die durch den Hebel betätigt wird. Durch diese Ausgestaltung verringert sich die Komplexität der Klappenanordnung und die Verbindungstechnologie wird vereinfacht.

Vorteilhafterweise sind die erste und zweite Lasche in je einer Sinterbuchse gelagert, welche wiederum in je einer Lagerbuchse positioniert ist. Durch diese Positionierung in der Sinterbuchse erfolgt eine konzentrische Lagerung des Kappenkörpers gegenüber den Anschlägen, wodurch eine rotative Schwenkbewegung des Klappenkörpers ohne Welle möglich ist.

In einer Ausgestaltung ist die erste Lasche quer zur Längserstreckung des Hebels durch diesen hindurchgeführt und hintergreift den Hebel, wobei der Hebel annähernd an der Lagerbuchse und/oder der Sinterbuchse geführt ist. Somit hat die Klappenanordnung auch ohne Welle einen gleichwertigen Funktionsumfang wie mit Welle. Das Hintergreifen der ersten Lasche, welche die Wellenfunktion übernimmt, an dem Hebel ermöglicht ein einfaches Befestigen ohne großen technologischen Aufwand.

In einer Variante ist ein durch den Hebel hindurchgeführtes Ende der ersten Lasche zur Befestigung an den Hebel aufgeweitet. Eine solche Aufweitung wird fachsprachlich als Auftulpen bezeichnet, wobei das Ende der ersten Lasche mit einem Werkzeug, welches eine Form vorgibt, so verändert wird, dass die Lasche gut mit dem Hebel verbunden ist. Durch diese Ausgestaltung ist gleichzeitig auch der Hebel an der Lageranordnung befestigt.

In einer Weiterbildung ist zwischen der Lagerbuchse und der Sinterbuchse eine sich radial erstreckende Wellendichtung angeordnet, welche dem Hebel zugewandt ist. Durch diese Wellendichtung werden Kräfte, die durch Verschiebungen der Positionen der Lager- bzw. Sinterbuchse auftreten, aufgenommen und abgeführt.

In einer weiteren Ausführungsform weist die Sinterbuchse an einer, dem Hebel gegenüberliegenden Stirnseite einen elastischen Dichtring, vorzugsweise einen O-Ring, auf. Mittels dieses elastischen Dichtrings wird die Bewegung, welche der Hebel auf die Lageranordnung überträgt, abgefedert.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:

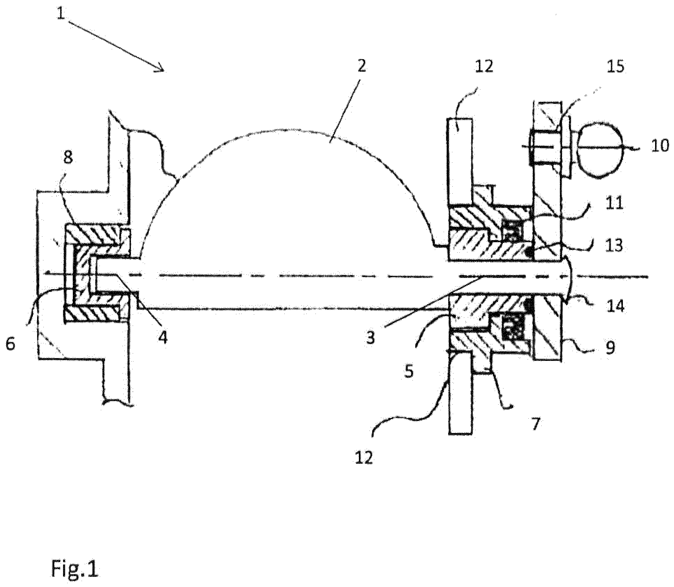

- Fig. 1: ein Ausführungsbeispiel einer erfindungsgemäßen Klappenanordnung,

### Bevorzugte Ausführung der Erfindung

Fig. 1 zeigt ein erstes Ausführungsbeispiel einer erfindungsgemäßen Klappenanordnung, welche vorteilhafter als Ventilklappe in einem AGR-Ventil (AGR-Abgasrückführung) eingesetzt wird. Dabei ist in einem Lager 1 des Abgasrückführventils ein Klappenkörper 2 angeordnet. Der Klappenkörper 2 weist dabei vorzugsweise eine kreisrunde Form auf und deckt mit seinem Durchmesser den Querschnitt des AGR-Ventils weitgehend ab. Der Klappenkörper 2 besitzt zwei, in einem Winkel von 180° auseinanderliegende Laschen 3, 4, welche beide jeweils in einer Sinterbuchse 5, 6 gelagert sind.

Jede Sinterbuchse 5, 6 wiederum ist in eine aus Stahl bestehenden Lagerbuchse 7, 8 eingeführt. Die erste Lasche 3 ist dabei länger ausgebildet als die zweite Lasche 4. Die erste Lasche 3 greift durch die Sinterbuchse 5 hindurch durch einen Hebel 9, welcher sich senkrecht zur axialen Ausdehnung der Sinterbuchse 5 bzw. der Lagerbuchse 7 erstreckt. Die erste Lasche 3 hintergreift den Hebel 9. Das Ende 14 der ersten Lasche 3, welche über den Hebel 9 hinaus steht, ist aufgeweitet, um eine mechanische Verbindung mit dem Hebel 9 herzustellen. An einem Ende des Hebels 9 ist ein Kugelkopf 10 über eine Verpressung 15 mit dem Hebel 9 verbunden, an welchem ein nicht weiter dargestelltes Aktorelement angreift und somit den Hebel 9 und damit den Klappenkörper 2 bewegt.

Die Sinterbuchse 5 und die Lagerbuchse 7 sind durch eine Wellendichtung 11, die radial um die erste Lasche 3 umläuft, gegeneinander vorgespannt und mittels einer Presspassung in ein Lagergehäuse 12 eingepresst. Zur Aufnahme von Schwingungen über den Hebel 9 ist die Stirnseite der Sinterbuchse 5 mit einem O-Ring 13 belegt, auf welchem der Hebel 9 aufliegt.

Die zweite Lasche 4 ist so in die zweite Sinterbuchse 6 eingelegt, dass diese ebenfalls mit der Lagerbuchse 8 und dem Lagergehäuse 12 verpresst ist.

Der Klappenkörper 2 und die Laschen 3 und 4 sind dabei einstückig aus einem Werkstück, vorzugsweise einem Blech, herausgestanzt. Die beiden Laschen 3, 4 werden in den Sinterbuchsen 5, 6 geführt, was eine konzentrische Lagerung und rotative Schwenkbewegung des Klappenkörpers 2 gegenüber nicht weiter dargestellten Anschlägen ermöglicht. Aufgrund dieser Lösung weist die Klappenanordnung eine reduzierte Komplexität auf, da auf eine separate Welle verzichtet werden kann, aber trotzdem ein gleichwertiger Funktionsumfang aufrechterhalten wird.

## Patentansprüche

1. Klappenanordnung für ein Stellglied, insbesondere für ein Abgasventil eines Verbrennungsmotors, mit einem Klappenkörper (2), welcher an seinem Außenumfang zwei zueinander entgegengesetzt angeordnete Laschen (3, 4) trägt, wobei der Klappenkörper (2) und die Laschen (3, 4) aus einem Teil ausgestanzt sind, und der Klappenkörper (2) über eine Lagerbuchse (7) eines Lagers (1) zur Ausführung einer Schwenkbewegung mit einer Hebeleinrichtung (9) in einer Wirkverbindung steht, **dadurch gekennzeichnet, dass** die erste Lasche (3) durch die Lagerbuchse (7) hindurchgreift und an dem Hebel (9) befestigt ist.

2. Klappenanordnung nach Anspruch 1, **dadurch gekennzeichnet, dass** die erste und zweite Lasche (3, 4) in je einer Sinterbuchse (5, 6) gelagert sind, welche wiederum in je einer Lagerbuchse (7, 8) positioniert ist.

3. Klappenanordnung nach Anspruch 1 oder 2, **dadurch gekennzeichnet, dass** die erste Lasche (3) quer zur Längserstreckung des Hebels (9) durch diesen hindurchgeführt ist und den Hebel (9) hintergreift, wobei der Hebel (9) an der Lagerbuchse (7) und/oder der Sinterbuchse (5) geführt ist.

4. Klappenanordnung nach Anspruch 3, **dadurch gekennzeichnet, dass** ein durch den Hebel (9) hindurchgeführtes Ende (14) der ersten Lasche (3) zur Befestigung an den Hebel (9) aufgeweitet ist.

5. Klappenanordnung nach Anspruch 3 oder 4, **dadurch gekennzeichnet, dass** zwischen der Lagerbuchse (7) und der Sinterbuchse (5) eine sich radial erstreckende Wellendichtung (11) angeordnet ist, welche dem Hebel (9) zugewandt ist.

6. Klappenanordnung nach mindestens einem der vorhergehenden Ansprüche, **dadurch gekennzeichnet, dass** die Sinterbuchse (5) an einer, dem Hebel (9) gegenüberliegenden Stirnseite einen elastischen Dichtring (13), vorzugsweise einen O-Ring, aufweist.

## Claims

1. A flap arrangement for an actuator, in particular for an exhaust gas valve of an internal combustion engine, having a flap body (2) with two tabs (3, 4) which are arranged opposite to each other on its outer circumference, wherein the flap body (2) and the tabs (3, 4) are punched out of one part and the flap body (2) is operatively connected to a lever device (9) via a bearing bush (7) of a bearing (1) in order to make a pivoting movement, **characterised in that** the first tab (3) reaches through the bearing bush (7) and is fixed on the lever (9).

2. The flap arrangement according to claim 1, **characterised in that** the first and second tabs (3, 4) are stored in a respective sintered bush (5, 6) which on the other hand is positioned in a respective bearing bush (7, 8).

3. The flap arrangement according to claim 1 or 2, **characterised in that** the first tab (3) is guided through the lever (9) and transversely to the longitudinal extension thereof and engages behind the lever (9), wherein the lever (9) is guided on the bearing bush (7) and/or the sintered bush (5).

4. The flap arrangement according to claim 3, **characterised in that** an end (14) of the first tab (3) guided through the lever (9) is flared in order to be fixed on the lever (9)

5. The flap arrangement according to claim 3 or 4, **characterised in that** a radially extending shaft seal (11) facing the lever (9) is arranged between the bearing bush (7) and the sintered bush (5).

6. The flap arrangement according to at least one of the preceding claims, **characterised in that** the sintered bush (5) has an elastic sealing ring (13), preferably an 0-ring, on a front side opposite the lever (9).

## Revendications

1. Agencement de clapet pour un actionneur, en particulier pour une soupape de gaz d'échappement d'un moteur à combustion interne, ledit agencement comprenant un corps de clapet (2) qui supporte, sur sa circonférence extérieure, deux languettes (3, 4) disposées en étant placées à l'opposé l'une de l'autre, où le corps de clapet (2) et les languettes (3, 4) sont matricées à partir d'une pièce, et le corps de clapet (2), par un coussinet de palier (7) d'un palier (1), est en liaison active avec un dispositif à levier (9) pour l'exécution d'un mouvement pivotant, **caractérisé en ce que** la première languette (3) passe à travers le coussinet de palier (7) et est fixée sur le levier (9).

2. Agencement de clapet selon la revendication 1, **caractérisé en ce que** la première et la seconde languette (3, 4) sont logées à chaque fois dans une douille frittée (5, 6) qui, à son tour, est positionnée à chaque fois dans un coussinet de palier (7, 8).

3. Agencement de clapet selon la revendication 1 ou 2, **caractérisé en ce que** la première languette (3) est guidée à travers le levier (9), transversalement par rapport à l'étendue longitudinale de celui-ci, et passe à travers le levier (9), où le levier (9) est guidé sur le coussinet de palier (7) et / ou sur la douille frittée (5).

4. Agencement de clapet selon la revendication 3, **caractérisé en ce qu'**une extrémité (14) de la première languette (3) est élargie pour servir à la fixation sur le levier (9), ladite extrémité étant guidée à travers le levier (9).

5. Agencement de clapet selon la revendication 3 ou 4, **caractérisé en ce qu'**un joint d'arbre (11) s'étendant radialement est disposé entre le coussinet de palier (7) et la douille frittée (5), lequel joint d'arbre est tourné vers le levier (9).

6. Agencement de clapet selon au moins l'une quelconque des revendications précédentes, **caractérisé en ce que** la douille frittée (5), sur un côté frontal faisant face au levier (9), présente un joint d'étanchéité élastique (13), de préférence un joint torique.
